# EUROPEAN PATENT SPECIFICATION

(11) **EP 1 621 440 B1**
(45) Date of publication and mention of the grant of the patent: **03.03.2010**
(21) Application number: 05014005.2
(22) Date of filing: 29.06.2005
(51) Int. Cl.: B62B 3/06

(54) **Lift truck for transporting item loading units**
Hublader zum Transport von Gegenständen
Chariot élévateur pour le transport des articles

(30) Priority: 30.07.2004 IT BO20040480
(43) Date of publication of application: 01.02.2006
(73) Proprietor: SIMA S.r.l., 41043 Formigine (MO) (IT)
(72) Inventor: Bardi, Maurizio, 41043 Formigine (Modena) (IT)
(74) Representative: Dall'Olio, Giancarlo

(56) References cited:
- DE-A1- 19 739 000
- DE-C- 311 208
- DE-C- 313 825
- GB-A- 1 553 292
- US-A- 3 647 014
- US-A- 4 613 272
- US-A1- 1 461 371
- US-A1- 1 463 538
- US-B1- 6 276 485

## Description

### DESCRIPTION OF THE INVENTION

The present invention relates to the technical field concerning the lift trucks for transporting items loading units, with particular reference to platform trucks.

The automatically guided vehicle field includes automatically guided lift trucks, which are operated by suitable radio signals and which can transport the loading units with the items thereon, between the parking areas and the items loading/unloading machines.

The lift trucks of the prior art include substantially a support framework, which has driven wheels and whose upper part carries a platform for receiving the loading units.

The loading platform moves vertically between a lower end stop and an upper end stop, due to the action of hydraulic jacks connected to the support framework.

The support framework has a group for managing the automated guiding, which can exchange radio signals with a control unit.

Lift trucks of a first type include support framework with four jacks, which have vertical axes, which are arranged symmetrically and whose stems operate the loading platform between the corresponding, lower and upper, end stops.

In order to maintain the loading platform parallel to the ground during the vertical movement, for a selected hydraulic control pressure equal strokes must be obtained for the four jacks stems.

Calibration and setting up of the jacks are extremely difficult and require much labor, especially due to the normal, but different, wearing out of the materials, which assure the hydraulic tightness of each jack.

Therefore, it is necessary to schedule very frequent maintenance cycles, which cause long inoperative times.

Lift trucks of a second type have the loading platform fastened to the support framework by a plurality of connecting rods, whose ends are hinged to them so as to define a parallelogram link mechanism.

The loading platform is operated by at least one jack having an inclined axis, and with the cylinder and stem bottom hinged to the support framework and to the loading platform, respectively.

The hinging axis of the stem bottom usually coincides with the hinging axis of the connecting rod of the parallelogram link mechanism.

In this way, the loading platform is operated to move in a combined way defined by a vertical translation and a horizontal translation.

The lift trucks of this type resolve the problem of keeping a position of the loading platform parallel with respect to the ground, during its vertical movement.

However, the movement imposed to the loading platform by the parallelogram link mechanism imposes horizontal forces acting on the loading unit, which causes a series of disadvantages.

The main disadvantage derives from the difficulties encountered while gripping the loading units, when they are in contact with the relative loading platform, which causes undesired slipping effects.

Not less important is the problem of the vertical stabilization of the loading units after the gripping step.

The presence of the horizontal motion elements causes a remarkable limit for the operating speed of the loading platform.

Another disadvantage of the latter type of lift trucks derives from the extremely uneven load distribution, which limits particularly the maximum load of the units to be transported, for the same truck shape.

Further, in US1463538, a lift truck according to the preamble of claim 1 is disclosed comprising a platform for carrying loads, which platform is supported by rollers carried by crank ams. The swinging of the crank arms produces the lifting of the platform.

Moreover, in US1461371, an elevating truck is disclosed, comprising an elevating frame, which is carried by the user strength, through the intervention of an appropriate lever, during the lifting operation, and then, after the lifting is finished, is carried, in front, by appropriate dogs and, in the rear, by rollers positioned on arms supported by upwardly projecting lugs of a below travelling frame.

The object of the present invention is to propose a lift truck for transporting items load units, which assures the parallel arrangement of the loading platform with respect to the ground, during platform movement, assuring at the same time best stability of the units on the loading platform while gripping them, as well as afterwards.

Another object of the present invention is to propose a lift truck, which is characterized by an extremely uniform load distribution, which allows a particularly high maximum load, with respect to the prior art lift trucks allows, with the same shape, that is, for the same required maximum load, it allows a reduction of the dimensions of the lift truck.

A further object of the present invention is to propose an extremely functional and reliable lift truck, which can assure particularly rapid and easy maintenance operations.

The above mentioned objects are obtained in accordance with the contents of the claims.

The characteristic features of the invention will be pointed out in the following description of some preferred but non exclusive embodiments, with reference to the enclosed figures, in which:
- Figure 1 is a schematic, top view of the lift truck proposed by the present invention;

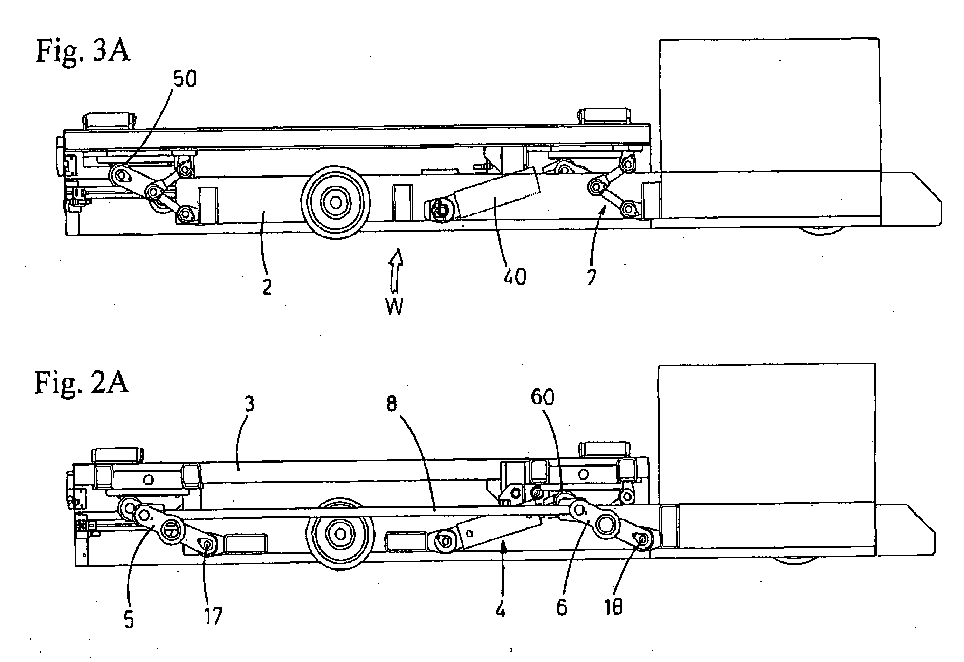

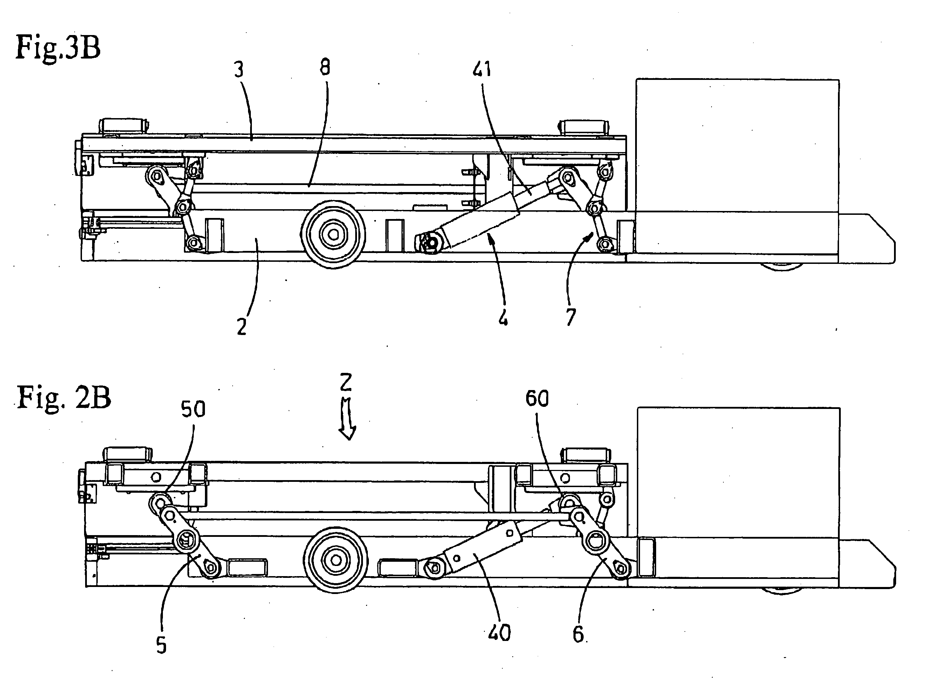

- Figures 2A, 2B are schematic, section views, taken along A-A of Figure 1, of the corresponding particularly significant working configurations,
- Figures 3A, 3B are schematic, lateral views of the proposed lift truck in the same working configurations shown in Figures 2A, 2B;

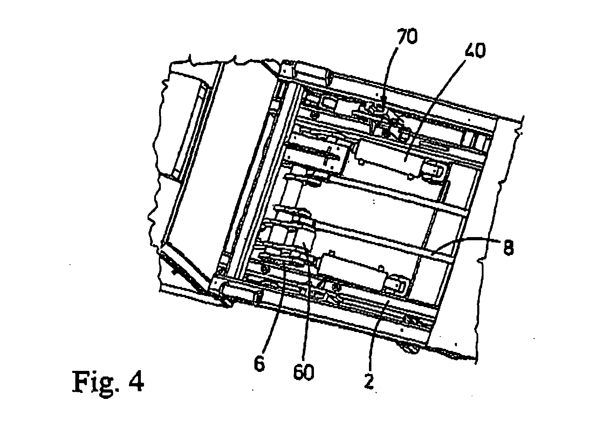

- Figure 4 is a schematic, partial, prospective view of the lift truck proposed by the present invention.

Regards the above Figures, the general reference number 1 indicates the proposed lift truck for transporting loading units for items, for example tiles.

The lift truck 1 includes, according to a known way, a support framework 2, which has powered wheels and to whose upper part a loading platform 3 is fastened to receive the loading units (not shown).

The loading platform 3 moves vertically between a corresponding lower end stop W and upper end stop Z.

The lift truck 1 proposed by the present invention advantageously includes at least one pair of pushing arms 5, 6, substantially parallel and coplanar, with the lower ends articulated to the support framework 2 and with the upper ends having relative rolls 50, 60, idle on their axes and aimed at supporting the loading platform 3 freely resting thereon.

The lift truck 1 includes also means 70 for vertically guiding the loading platform 3 with respect to the support framework 2 during the transition between the end stops, the lower end stop W and the upper end stop Z.

The pushing arms 5, 6 are connected mechanically by a tie rod 8, articulated to their ends, to define a kind of parallelogram link mechanism, and are operated by at least one hydraulic jack 4, whose cylinder 40 and the stem bottom 41 are articulated respectively to the support framework 2 and to one of the pushing arms 5, 6.

Advantageously, the stem foot 41 of the hydraulic jack 4 is articulated to one of the pushing arms 5, 6 in a point corresponding to the axis of the relative roll 50, 60.

The tie rod 8 can be articulated to the pushing arms 5, 6 in correspondence to the respective bodies, or in correspondence to the axes of the corresponding rolls 50, 60.

According to a preferred embodiment, shown in the enclosed Figures, the lift truck 1 includes two pairs of pushing arms 5, 6, arranged one beside the other and connected mechanically.

Each of the pairs of pushing arms 5, 6 includes a relative tie rod 8 and the corresponding rolls 50, 60, which are aimed at carrying the loading platform 3 freely resting thereon.

The preferred lift truck 1 includes also a pair of hydraulic jacks 4, each of which is connected to the corresponding pair of pushing arms 5, 6.

According to another embodiment, it is possible to move the pairs of pushing arms 5, 6, connected mechanically, by only one hydraulic jack 4.

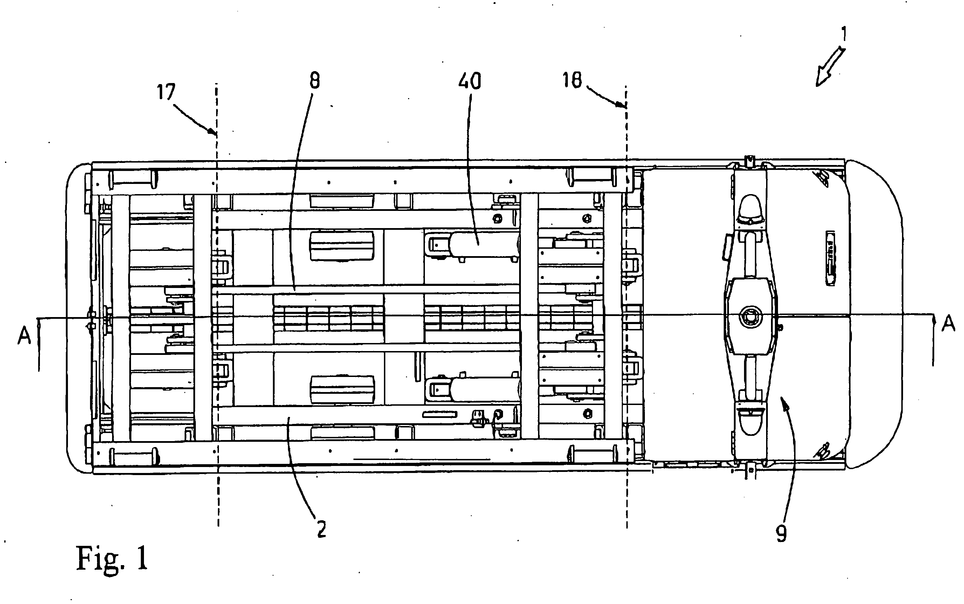

With particular reference to Figure 1, the corresponding pushing arms 5, 6 of each pair are parallel and articulated to the support framework 2 along the same transversal axis 17, 18.

The vertical guiding means 70 include groups 7 for transversal stabilization of the loading platform 3 with respect to the support framework 2, advantageously including so-called toggle joints, that is, pairs of connecting rods, arranged on a vertical plane, articulated to each other at points corresponding to their common ends, and hinged, at their free ends, to the loading platform 3 and the support framework 2.

The rolls 50, 60, connected to the pairs of pushing arms 5, 6 are advantageously made of materials, whose rolling friction coefficient is low, in order to reduce their wear and the consequent maintenance.

According to the characteristics, the proposed lift truck 1 can include, connected to the support framework 2, a control cab (not shown) for allowing a manual guiding.

The operation principle of the lift truck 1 will be now briefly described, beginning with the loading platform 3 in the lower end stop W.

As soon as the lift truck 1 is positioned below the loading unit to be transported, lying on the ground, the powered wheels are deactivated and the two jacks 4 are operated , so as to drive the loading platform 3 toward its upper end stop Z configuration.

During a first working step, the loading platform 3, operated to move only vertically, moves first close to and then touches the base of the loading unit, allowing a best gripping thereof, without any destabilizing effect due to the horizontal motion elements, as it occurs in the prior art.

As soon as the loading platform 3 is brought to the upper end stop Z configuration, the jacks 4 are deactivated and the powered wheels are operated, so that the lift truck 1 can transport the carried loading unit according to the indications coming from the control cab.

It appears obvious from the above description, how the proposed lift truck for transporting items loading units during the loading platform operation, can assure the parallel position of the loading platform with respect to the ground, assuring at the same time best stability of the units on the loading platform during the gripping step, as well as afterwards.

This is due to the fact that the loading platform is operated only with vertical motion, suitably guided by the vertical guiding means and by the toggle joints, by the action of one or more hydraulic jacks, whose stems operate the corresponding pair of pushing arms to reproduce a kind of parallelogram link mechanism, with the upper hinges sliding with respect to the loading platform, due to the presence of the idle rolls.

Due to the free lying of the loading platform on the idle rolls present on the upper ends of the pushing arms, the distribution of the loads on the same loading platform is quite uniform.

With respect to the prior art lift trucks, the uniform load distribution allows, for the same dimension, a particularly high maximum load, that is, for the same required maximum load, it allows a reduction of the dimensions of the lift truck.

The proposed lift truck allows transportation of loading units of any kind of items, for example, not limiting, tiles.

The above advantages are obtained by an extremely functional and reliable lift truck, which can assure particularly rapid and easy maintenance operations.

## Claims

1. Lift truck for transporting items loading units, of the type including:
- a support framework (2), which has powered wheels, and to whose upper part a loading platform (3) is connected to receive said loading units, said loading platform (3) movable vertically, between corresponding lower end stop (W) and upper end stop (Z), due to the action of actuator means (4), connected to the support framework (2);
- means (70) for vertical guiding of the loading platform (3) with respect to said support framework (2), so that the loading platform (3) can be operated only in vertical motion during the transition between said lower end stop (W) and said upper end stop (Z); and
- at least a pair of pushing arms (5,6), coplanar and parallel, operated by said actuator means (4), with their corresponding lower ends articulated to said support framework (2) and with their corresponding upper ends having relative rolling means (50,60), idle on their axes and carrying the loading platform (3) freely thereon,
- a kind of parallelogram link mechanism,
said lift truck (1) being **characterized in that:**
- said kind of parallelogram link mechanism is defined by the support framework (2), by said pair of pushing arms (5, 6), and by a relative tie rod (8) articulated at its ends to the pushing arms (5, 6), and **in that**
- said actuator means (4) are also connected at least to one of the pushing arms (5,6),
so that, during the vertical movement of the platform (3), the parallel position of the loading platform (3) with respect to the ground is assured.

2. Lift truck, as claimed in claim 1, **characterized in that** said actuator means (4) include at least one hydraulic jack, whose cylinder (40) and the stem base (41) are articulated with respect to said support framework (2) and one of the pushing arms (5, 6).

3. Lift truck, as claimed in claim 2, **characterized in that** the stem base (41) of the hydraulic jack (4) is articulated to one of said pushing arms (5, 6) in points corresponding to the axis of the relative rolling means (50, 60).

4. Lift truck, as claimed in claim 1, **characterized in that** said tie rod (8) is articulated to the pushing arms (5, 6) in points corresponding to the axes of the corresponding rolling means (50, 60).

5. Lift truck, as claimed in claim 1, **characterized in that** said vertical guiding means (70) include at least one group (7) for transversal stabilization of the loading platform (3) with respect to the support framework (2).

6. Lift truck, as claimed in claim 5, **characterized in that** said group (7) for transversal stabilization includes a pair of connecting rods, arranged on a vertical plane, articulated to each other in points corresponding to common ends and, with the free ends, hinged to the loading platform (3) and the support framework (2).

7. Lift truck, as claimed in one of the claims from 1 to 6, **characterized in that** it includes two pairs of pushing arms (5, 6), arranged one beside the other and connected mechanically, each having its tie rod (8) and corresponding rolling means (50, 60); with the corresponding pushing arms (5, 6) of each pair being parallel and articulated to the support framework (2) on the same transversal axis (17, 18).

8. Lift truck, as claimed in claim 7, **characterized in that** it includes at least two hydraulic jacks (4), each of which connected to the corresponding pair of pushing arms (5, 6).

9. Lift truck, as claimed in one of the claims from 1 to 8, **characterized in that** said rolling means (50, 60) are rolls, idle on their axes.

10. Lift truck, as claimed in claim 9, **characterized in that** said rolls (50, 60) are made of material, whose rolling friction coefficient is low.

11. Lift truck, as claimed in one of the claims from 1 to 10, **characterized in that** it includes, connected to said support framework (2), a control cab, which allows a manual guiding by an operator.

## Patentansprüche

1. Hubwagen zum Transportieren von Gegenstandladeeinheiten von der Art, die aufweist:
einen Unterstützungsrahmen (2), der angetriebene Räder aufweist und mit dessen oberem Teil eine Ladeplattform (3) verbunden ist, um die Ladeeinheiten aufzunehmen, während die Ladeplattform (3) vertikal bewegbar ist entsprechend zwischen unterem Endanschlag (W) und oberem Endanschlag (Z) in Folge der Betätigung von Stellgliedmitteln (4), die mit dem Unterstützungsrahmen (2) verbunden sind,
Mittel (70) zum vertikalen Führen der Ladeplattform (3) in Bezug auf den Unterstützungsrahmen (2), so dass die Ladeplattform (3) lediglich in vertikaler Bewegung während des Übergangs zwischen dem unteren Endanschlag (W) und dem oberen Endanschlag (Z) betrieben werden kann, und
mindestens ein Paar Schubarme (5, 6), die koplanar und parallel sind sowie durch die Stellgliedmittel (4) betrieben werden, während ihre entsprechenden unteren Enden an dem Unterstützungsrahmen (2) angelenkt sind und ihre entsprechenden oberen Enden relative Rollmittel (50, 60) aufweisen, die frei beweglich auf ihren Achsen angeordnet sind und die Ladeplattform (3) frei darauf tragen, sowie
eine Art Parallelogrammverbindungsmechanismus,
der Hubwagen (1) ist **dadurch gekennzeichnet, dass**
die Art Parallelogrammverbindungsmechanismus definiert ist durch den Unterstützungsrahmen (2), durch das Paar Schubarme (5, 6) und durch eine relative Zugstange (8), die an ihrem Ende an den Schubarmen (5, 6) angelenkt ist, sowie **dadurch**, dass
die Stellgliedmittel (4) ebenso mit mindestens einem der Schubarme (5, 6) verbunden sind, so dass während der vertikalen Bewegung der Plattform (3) die parallele Position der Ladeplattform (3) im Bezug auf den Boden sichergestellt ist.

2. Hubwagen gemäß Anspruch 1, **dadurch gekennzeichnet, dass** die Stellgliedmittel (4) mindestens eine hydraulische Hebevorrichtung umfassen, deren Zylinder (40) und Schaftboden (41) angelenkt sind in Bezug auf den Unterstützungsrahmen (2) und einen der Schubarme (5, 6).

3. Hubwagen gemäß Anspruch 2, **dadurch gekennzeichnet, dass** der Schaftboden (41) der hydraulischen Hebevorrichtung (4) angelenkt ist an einem der Schubarme (5, 6) an Punkten, die der Achse der relativen Rollmittel (50, 60) entsprechen.

4. Hubwagen gemäß Anspruch 1, **dadurch gekennzeichnet, dass** die Zugstange (8) angelenkt ist an den Schubarmen (5, 6) an Punkten, die den Achsen der entsprechenden Rollmittel (50, 60) entsprechen.

5. Hubwagen gemäß Anspruch 1, **dadurch gekennzeichnet, dass** die vertikalen Führungsmittel (70) mindestens eine Gruppe (7) zur Querstabilisierung der Ladeplattform (3) in Bezug auf den Unterstützungsrahmen (2) aufweisen.

6. Hubwagen gemäß Anspruch 5, **dadurch gekennzeichnet, dass** die Gruppe (7) zur Querstabilisierung ein Paar an Verbindungsstangen aufweist, die auf einer vertikalen Ebene angeordnet sind, die angelenkt sind aneinander an Punkten, die einem gemeinsamen Ende entsprechen und die mit den freien Enden gelenkig mit der Ladeplattform (3) und dem Unterstützungsrahmen (2) verbunden sind.

7. Hubwagen gemäß einem der Ansprüche 1 bis 6, **dadurch gekennzeichnet, dass** er zwei Paare an Schubarmen (5, 6) aufweist, die nebeneinander angeordnet und mechanisch verbunden sind, während jeder seine Zugstange (8) und entsprechende Rollmittel (50, 60) aufweist, wobei die entsprechenden Schubarme (5, 6) jedes Paares parallel sind und an dem Unterstützungsrahmen (2) an derselben Querachse (17, 18) angelenkt sind.

8. Hubwagen gemäß Anspruch 7, **dadurch gekennzeichnet, dass** er mindestens zwei hydraulische Hebevorrichtungen (4) aufweist, von denen jede mit dem entsprechenden Paar an Schubarmen (5, 6) verbunden ist.

9. Hubwagen gemäß einem der Ansprüche 1 bis 8, **dadurch gekennzeichnet, dass** die Rollmittel (50, 60) Rollen sind, die frei beweglich auf ihren Achsen angeordnet sind.

10. Hubwagen gemäß Anspruch 9, **dadurch gekennzeichnet, dass** die Rollen (50, 60) aus einem Material hergestellt sind, dessen Rollreibungskoeffizient niedrig ist.

11. Hubwagen gemäß einem der Ansprüche 1 bis 10, **dadurch gekennzeichnet, dass** eine mit dem Unterstützungsrahmen (2) verbundene Steuerkabine aufweist, die ein manuelles Führen durch einen Betreiber gestattet.

## Revendications

1. Chariot élévateur pour transporter des unités de chargement d'articles, du type comprenant:
un châssis de support (2) qui a des roues motorisées et dont la partie supérieure d'une plateforme de chargement (3) est raccordée pur recevoir lesdites unités de chargement, ladite plateforme de chargement (3) étant verticalement mobile, entre la butée d'extrémité inférieure (W) et la butée d'extrémité supérieure (Z) correspondantes, en raison de l'action des moyens d'actionneur (4) raccordés au châssis de support (2) ;
des moyens (70) pour le guidage vertical de la plateforme de chargement (3) par rapport audit châssis de support (2), de sorte que la plateforme de chargement (3) ne peut être actionnée que dans la direction verticale pendant la transition entre ladite butée d'extrémité inférieure (W) et ladite butée d'extrémité supérieure (Z) ; et
au moins une paire de bras de poussée (5, 6) coplanaires et parallèles, actionnée par lesdits moyens d'actionneur (4) avec leurs extrémités inférieures correspondantes articulées par rapport audit châssis de support (2) et avec leurs extrémités supérieures correspondantes ayant des moyens de roulement (50, 60) relatifs libres sur leurs axes et transportant la plateforme de chargement (3) librement sur ceux-ci,
un genre de mécanisme de tringlerie parallélogramme,
ledit chariot élévateur (1) étant **caractérisé en ce que :**
ledit genre de mécanisme de tringlerie parallélogramme est défini par le châssis de support (2), par ladite paire de bras de poussée (5, 6) et par un tirant (8) relatif, articulé au niveau de ses extrémités par rapport aux bras de poussée (5, 6), et **en ce que** :
lesdits moyens d'actionneur (4) sont également raccordés au moins à l'un des bras de poussée (5, 6) de sorte que pendant le mouvement vertical de la plateforme (3), la position parallèle de la plateforme de chargement (3) par rapport au sol est garantie.

2. Chariot élévateur selon la revendication 1, **caractérisé en ce que** lesdits moyens d'actionneur (4) comprennent au moins un vérin hydraulique, dont le cylindre (40) et la base de tige (41) sont articulés par rapport audit châssis de support (2) et à l'un des bras de poussée (5, 6).

3. Chariot élévateur selon la revendication 2, **caractérisé en ce que** la base de tige (41) du vérin hydraulique (4) est articulée par rapport à l'un desdits bras de poussée (5, 6) à des points correspondant à l'axe des moyens de roulement (50, 60) relatifs.

4. Chariot élévateur selon la revendication 1, **caractérisé en ce que** ledit tirant (8) est articulé par rapport aux bras de poussée (5, 6) à des points correspondant aux axes des moyens de roulement (50, 60) correspondants.

5. Chariot élévateur selon la revendication 1, **caractérisé en ce que** lesdits moyens de guidage verticaux (70) comprennent au moins un groupe (7) pour la stabilisation transversale de la plateforme de chargement (3) par rapport au châssis de support (2).

6. Chariot élévateur selon la revendication 5, **caractérisé en ce que** ledit groupe (7) pour la stabilisation transversale comprend une paire de bielles, agencée sur un plan vertical, articulées l'une par rapport à l'autre à des points correspondant aux extrémités communes et avec les extrémités libres articulées par rapport à la plateforme de chargement (3) et au châssis de support (2).

7. Chariot élévateur selon l'une quelconque des revendications 1 à 6, **caractérisé en ce qu'**il comprend deux paires de bras de poussée (5, 6) agencées l'une à côté de l'autre et raccordées mécaniquement, chacune ayant son tirant (8) et les moyens de roulement (50, 60) correspondants; avec les bras de poussée (5, 6) correspondants de chaque paire qui sont parallèles et articulés par rapport au châssis de support (2) sur le même axe transversal (17, 18).

8. Chariot élévateur selon la revendication 7, **caractérisé en ce qu'**il comprend au moins deux vérins hydrauliques (4), dont chacun est raccordé à la paire correspondante de bras de poussée (5, 6).

9. Chariot élévateur selon l'une quelconque des revendications 1 à 8, **caractérisé en ce que** lesdits moyens de roulement (50, 60) sont des rouleaux, libres sur leurs axes.

10. Chariot élévateur selon la revendication 9, **caractérisé en ce que** lesdits rouleaux (50, 60) sont réalisés avec un matériau dont le coefficient de friction est faible.

11. Chariot élévateur selon l'une quelconque des revendications 1 à 10, **caractérisé en ce qu'**il comprend, raccordée audit châssis de support (2), une cabine de commande, qui permet un guidage manuel par un opérateur.
